# EUROPEAN PATENT SPECIFICATION

(11) **EP 0 584 098 B1**
(45) Date of publication and mention of the grant of the patent: **20.03.1996**
(21) Application number: 92908944.9
(22) Date of filing: 29.04.1992
(51) Int. Cl.: F16D 65/52

(54) **A DRUM BRAKE**
TROMMELBREMSE
FREIN A TAMBOUR

(30) Priority: 15.05.1991 GB 91105130
(43) Date of publication of application: 02.03.1994
(73) Proprietor: AUTOMOTIVE PRODUCTS PUBLIC LIMITED COMPANY, Leamington Spa Warwickshire CV31 3ER (GB)
(72) Inventor: QUINEY, Kenneth Maurice, Kingsheath, Birmingham B13 0DA (US)
(74) Representative: Morrall, Roger
(86) International application number: GB9200783
(87) International publication number: WO9220938

(56) References cited:
- EP-A- 0 276 611
- FR-A- 935 316
- GB-A- 549 914
- GB-A- 1 483 693
- GB-A- 1 507 550
- GB-A- 2 132 291
- US-A- 2 207 261

## Description

The present invention relates to drum brakes and in particular to adjuster for drum brakes in which the adjuster is disabled when the drum becomes overheated, to prevent over adjustment of the brake.

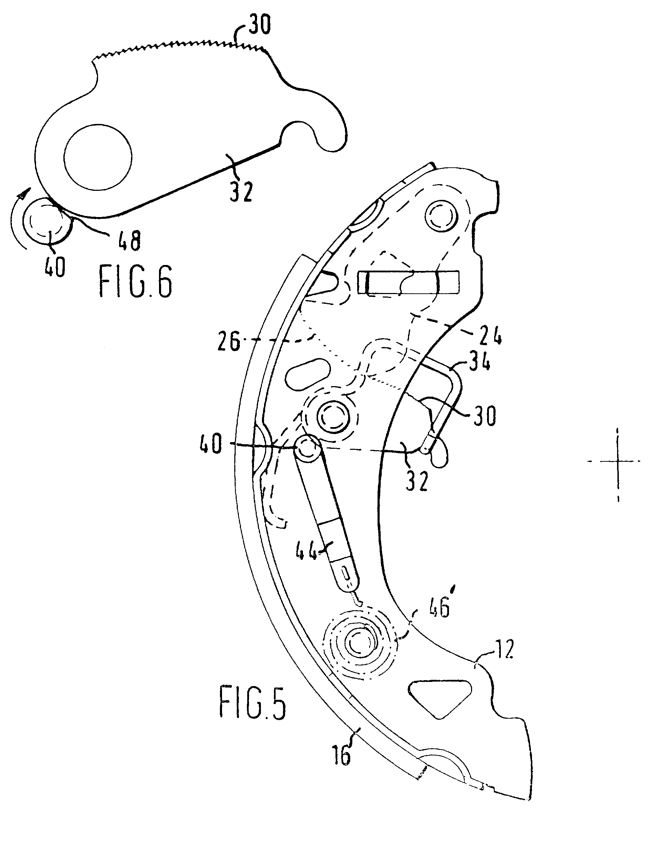

GB 1 483 693 discloses various adjuster arrangements including an adjuster lever member and a pawl member (see Figs 4 and 5) having mutually engaged surfaces and being rotatable about respective axes and a stop mounted on a bimetal strip such that, when the drum is heated above a certain temperature, the stop moves into a position where the pawl will abut against the stop after rotating slightly, thereby preventing adjustment.

However the position of the adjuster lever and pawl varies gradually as the brake pads wear and the simple abutting engagement between the stop and the pawl does not take account of this.

The present invention provides a drum brake assembly for a motor vehicle comprising an actuator mounted between opposed brake shoe ends and operable to move said ends apart to apply the brakes, and an adjuster comprising a strut having one end of the strut engaging a lever member, pivotted to the other brake shoe, to rotate the lever member in one direction of rotation if the brake shoe ends move apart by more than a predetermined amount, said lever member being engageable with a reaction member also pivotted to said other brake shoe and used to engage the lever member to allow rotation of the lever member in said one direction of rotation but not in the other, and a thermally responsive locking means engageable with one of said members when said one member is in any one of a range of positions to prevent pivotting of the said one member and hence operation of the adjuster above a certain temperature.

Preferably the said one member is locked by frictional engagement between the locking means and the said one member. This enables the range of positions to be a continuous range. Alternatively the locking means and the said one member can have interengaging teeth such that the said one member can be locked in any of a range of discrete positions.

Preferably the locking means includes a locking member rotatable into and out of engagement with the said one member, and the locking means may also include a lever one end of which is acted upon by a thermally responsive element. This enables a good mechanical advantage to be obtained thereby locking the said one member firmly.

The locking means preferably includes a thermally responsive element which may comprise a coil or strip of bimetal or memory metal.
Preferred embodiments of the present invention will now be described by way of example only with reference to the accompanying drawings in which:-
- Fig 1: is an elevation of a known drum brake;
- Fig 2: is an elevation of a shoe of a drum brake and an adjuster according to a first embodiment of the present invention;
- Fif 3 and Fig 4: are elevations of a locking element of the adjuster of Fig 2;
- Fig 5: is a further embodiment similar to that shown in Fig 2;
- Fig 6: is an enlargement of the strut and lock means of Fig 5
- Fig 7: is an elevation of a shoe of a drum brake and an adjuster according to a second embodiment of the invention;
- Fig 8: is an elevation of the part of the adjuster of Fig 5; and
- Figs 9 and 10: are sections on line VII - VII of Fig 5 showing the adjuster in two different positions;

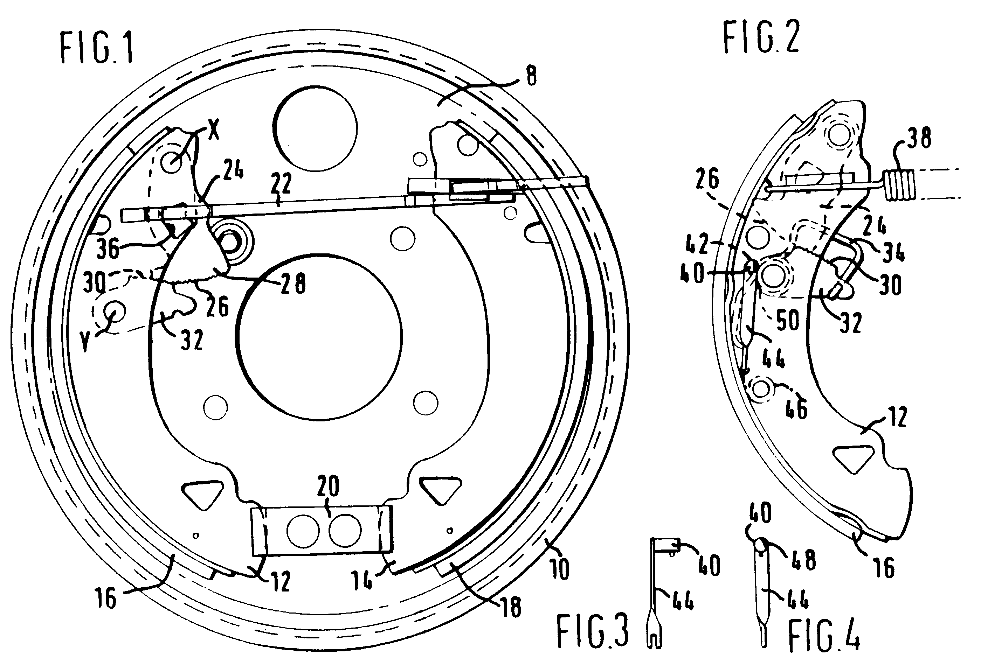

Referring to Fig 1 a known drum brake comprises a back plate 8, a drum 10, two shoes, 12, 14 mounted on the backplate having friction facings 16, 18 mounted thereon, the shoes having one end supported against a fixed abutment 20, and a strut 22 acting between the other ends of the shoes to limit the distance the shoes move together under the bias of the return spring (38) (see Fig 2).

The shoe 14 has the strut 22 constrained to move therewith by a spring (not shown) in the conventional manner. The other shoe 12 has an adjuster lever 24 mounted thereon pivotable about an axis X. The lever 24 has teeth 26 on its free end 28 which engage with teeth 30 on a reaction member in the form of an adjuster pawl 32 also mounted on said other shoe 14. The pawl 32 is rotatable about an axis Y and is urged against the adjuster lever 24 by a spring 34 (Fig 2). A projection on the strut 22 engages with play in an aperture 36 in the adjuster lever 24 and acts against the adjuster lever to hold the shoe 12 away from the other shoe 14. The shoes are urged together and against the strut 22 by the spring 38.

When the shoes are urged apart, for example by a hydraulic cylinder (not shown) acting between the ends of the shoes remote from the fixed abutment 20 the strut 22 is held against the shoe 14 by a spring. If the friction facings 16,18 are worn and the shoes move far enough from the projection on the strut 22 to engage the edge of the aperture 36 to cause the lever 24 to rotate anti-clockwise as shown in Fig 1. The pawl 32 rotates clockwise against the force of the spring 34 and, if the adjuster lever moves far enough the teeth 26, 30 on the adjuster lever and pawl ride over one another and the adjuster lever 24 moves one tooth or more further than the pawl 32. The teeth 26, 30 prevent the adjuster lever 24 from rotating back again when the shoes 12, 14 are released so the strut 22 holds the shoes 12, 14 further apart ready for the next brake actuation.

Referring to Figs 2, 3 and 4, locking means in the first embodiment of the invention comprises a locking member 40 rotatably mounted in a hole 42 in the shoe 12, and a lever 44 having one end connected to the locking member, and another end connected to a bimetallic strip 46. The bimetallic strip 46 is in the form of a coil having its inner end mounted on the shoe 12 and its outer end connected to the lever 44. The bimetallic strip 46 is mounted on the shoe 12 near to the friction facing 16 so that heat generated in the friction facing is passed easily to the bimetallic strip.

The locking member 40 is cylindrical but has one surface portion cut away along a chord to form a flat engagement surfaces 48. The locking member is mounted such that when the friction facing is cool, the engagement 48 is just clear of a curved surface 50 on the pawl 32, the curved surface having as its centre of curvature the axis of rotation of the pawl 32.

As the brake becomes hotter the bimetallic strip 46 coils up tighter and rotates the lever 44 and the locking member 40 anti-clockwise as shown in Fig 2. When the brake reaches a certain temperature, the flat engagement surface 48 engages with the curved surface 50 on the pawl and prevents rotation of the pawl, which in turn locks the adjustment lever 24. This prevents over adjustment with would otherwise be caused by the shoes moving excessively far out due to expansion of the drum. Because the curved surface 50 on the pawl 32 and the engagement surface 48 on the locking member 40 engage in frictional contact the pawl 32 and lever 24 can be locked in any of a continuous range of positions.

In another embodiment shown in Figs 5 and 6, the strip 46' can be coiled in the other direction so that it rotates the engaging element clockwise as shown in Fig 6. This has the effect of locking the pawl to the lever member 24.

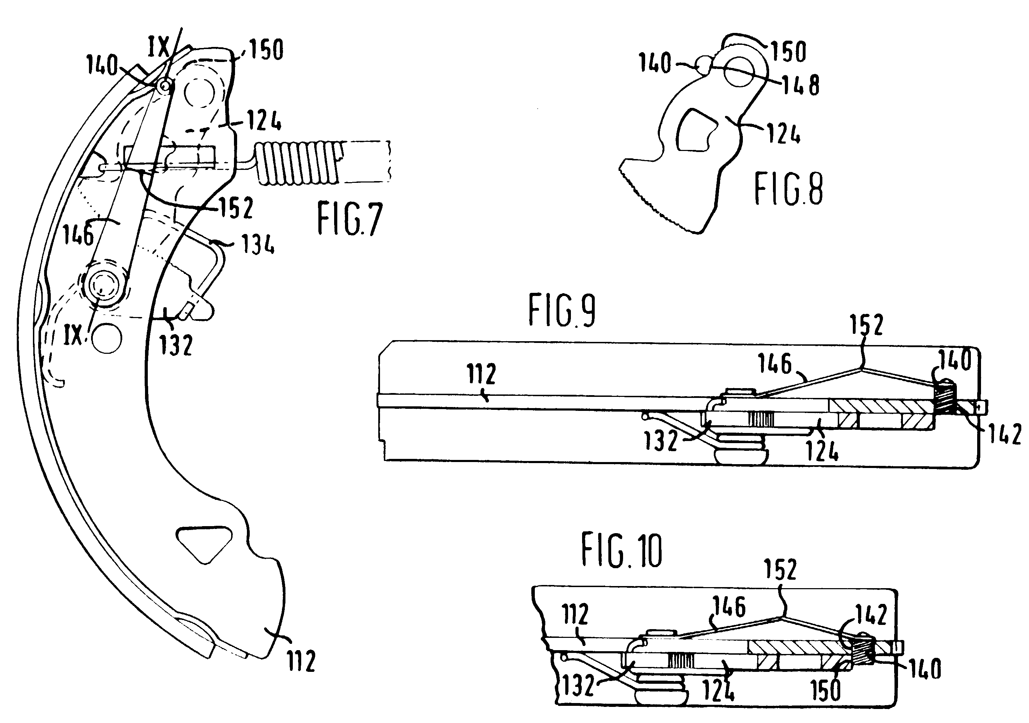

Referring to Figs 7 and 10, in the second embodiment the shoe 112, lever 124, adjuster pawl 132, spring 134 and strut (not shown in Fig 5) are identical to the corresponding parts in the first embodiment of the invention, except that the adjuster lever 124 has a toothed curved surface 150 centred on its axis of rotation X (Fig 6).

The locking means comprises a cylindrical locking element 140 movable axially through a hole 142 in the shoe 112 and having a toothed surface 148 thereon, and a bimetallic strip 146 having one end mounted on the shoe 112 and the other end connected to the locking element 140. The bimetallic strip is formed as a flat strip with a bend 152 in the middle to raise it off the surface of the shoe 112.
When the brake is cool, the locking element is in the position shown in Fig 7 and the adjuster lever 124 is free to rotate anticlockwise as shown in Fig 5. When the shoe 112 becomes hot the locking element 140 is moved through the hole 142 and, at a certain temperature, comes into engagement with the curved surface 150 as shown in Fig 8 and the toothed surfaces 148 and 150 on the locking element and adjustment lever prevent rotation of the adjuster lever 124. The adjuster lever 124 can be locked in any of a range of discrete positions the distance between the positions being set by the size of the teeth.

## Claims

1. A drum brake assembly for a motor vehicle comprising an actuator mounted between opposed brake shoe ends and operable to move said ends apart to apply the brake, and an adjuster comprising a strut (22) having one end constrained to move with one brake shoe (14) and the other end of the strut engaging a lever member (24,124), pivotted (X) to the other brake shoe (12,112), to rotate the lever member (24,124) in one direction of rotation if the brake shoe ends move apart by more than a predetermined amount, said lever member (24,124) being engageable with a reaction member (32,132) also pivotted (Y) to said other brake shoe (12,112) and used to engage the lever member (24,124) to allow rotation of the lever member (24,124) in said one direction of rotation but not in the other, and a thermally responsive locking means (40,44,46;140,146) engageable with one of said members (32,124) when said one member (32,124) is in any one of a range of positions to prevent pivotting of the said one member (32,124) and hence operation of the adjuster above a certain temperature.

2. A drum brake assembly according to Claim 1 wherein said one member (32,124) is locked by frictional engagement between the locking means (40,44,46; 140,146) and the said one member (32,124).

3. A drum brake assembly according to Claim 1 or Claim 2 wherein the locking means (40,44,46;140,146) includes a locking member (40,140) rotatable into and out of engagement with said one member (32,124).

4. A drum brake assembly according to any foregoing claim wherein said locking means (40,44,46) includes a lever (44) one end of which is acted upon by a thermally responsive element (46).

5. A drum brake assembly according to Claim 4 wherein the thermally responsive element (46) is mounted on said other brake shoe (12) near the friction facing (16) thereof.

6. A drum brake assembly according to any foregoing claim wherein the locking means includes a coiled bimetallic strip (46').

7. A drum brake assembly according to any foregoing claim wherein said locking means (140,146) includes a locking member (140) mounted on one end of a bimetallic strip (146).

8. A drum brake assembly according to any foregoing claim wherein the locking means (40,44,46; 140,146) is arranged to engage a surface (50,150) on said one member (32,124) which has a centre of curvature substantially on the axis of rotation of said one member.

9. A drum brake assembly according to any foregoing claim wherein the reaction member is a pawl (32).

10. A drum brake assembly according to any one of Claims 1 to 9 wherein said one member is the reaction member (32).

11. A drum brake assembly as claimed in any one of Claims 1 to 9 wherein said one member is the lever member (124).

## Patentansprüche

1. Trommelbremsenvorrichtung für ein Motorfahrzeug, das folgende Komponenten aufweist: ein Stellglied, das zwischen gegenüberliegenden Bremsschuhenden montiert ist und so arbeitet, daß es diese Enden auseinander bewegt, um die Bremse zu betätigen, und einen Regler, der einen Druckstab (22) aufweist, dessen eines Ende eingespannt ist, um sich mit einem Bremsschuh (14) zu bewegen, und wobei das andere Ende des Druckstabs mit einem Hebelelement (24, 124) im Eingriff ist, das gelenkig (X) mit dem anderen Bremsschuh (12, 112) verbunden ist, um das Hebelelement (24, 124) in einer Rotationsrichtung zu drehen, wenn sich die Enden der Bremsschuhe um mehr als einen festgelegten Betrag auseinander bewegen, wobei das Hebelelement (24, 124) mit einem Reaktionselement (32, 132) im Eingriff sein kann, das ebenfalls gelenkig (Y) mit dem anderen Bremsschuh (12, 112) verbunden ist und dazu dient, in das Hebelelement (24, 124) einzugreifen, um die Drehung des Hebelelements (24, 124) in der genannten einen Rotationsrichtung, nicht aber in der anderen, zu ermöglichen, und ein auf Wärme ansprechendes Sperrmittel (40. 44, 46; 140, 146), das mit einem der Elemente (32, 124) in Eingriff kommen kann, wenn sich dieses eine Element (32, 124) in einer Position eines Bereiches von Positionen befindet, um die Schwenkbewegung des einen Elements (32, 124) und damit die Arbeit des Reglers über einer bestimmten Temperatur zu verhindern.

2. Trommelbremsenvorrichtung nach Anspruch 1, bei der das eine Element (32, 124) durch den Reibungseingriff zwischen dem Sperrmittel (40, 44, 46; 140, 146) und dem einen Element (32, 124) festgestellt wird.

3. Trommelbremsenvorrichtung nach Anspruch 1 oder Anspruch 2, bei der das Sperrmittel (40, 44, 46; 140, 146) ein Sperrelement (40, 140) einschließt, das zum Eingriff und aus dem Eingriff mit dem einen Element (32, 124) gedreht werden kann.

4. Trommelbremsenvorrichtung nach einem der vorhergehenden Ansprüche, bei dem das Sperrmittel (40, 44, 46) einen Hebel (44) einschließt, auf dessen eines Ende ein auf Wärme ansprechendes Element (46) einwirkt.

5. Trommelbremsenvorrichtung nach Anspruch 4, bei dem das auf Wärme ansprechende Element (46) auf dem anderen Bremsschuh (12) in der Nähe von dessen Reibfläche (16) angebracht ist.

6. Trommelbremsenvorrichtung nach einem der vorhergehenden Ansprüche, bei dem das Sperrmittel einen zusammengerollten Bimetallstreifen (46') einschließt.

7. Trommelbremsenvorrichtung nach einem der vorhergehenden Ansprüche, bei dem das Sperrmittel (140, 146) ein Sperrelement (140) einschließt, das an einem Ende eines Bimetallstreifens (146) angebracht ist.

8. Trommelbremsenvorrichtung nach einem der vorhergehenden Ansprüche, bei der das Sperrmittel (40, 44, 46; 140, 146) so angeordnet ist, daß es mit einer Fläche (50, 150) auf dem einen Element (32, 124) zum Eingriff kommt, die einen Krümmungsmittelpunkt hat, der im wesentlichen auf der Rotationsachse des einen Elements liegt.

9. Trommelbremsenvorrichtung nach einem der vorhergehenden Ansprüche, bei der das Reaktionselement eine Klinke (32) ist.

10. Trommelbremsenvorrichtung nach einem der Ansprüche 1 bis 9, bei der das eine Element ein Reaktionselement (32) ist.

11. Trommelbremsenvorrichtung nach einem der Ansprüche 1 bis 9, bei der das eine Element ein Hebelelement (124) ist.

## Revendications

1. Assemblage de frein à tambour pour un véhicule à moteur comprenant un dispositif de commande monté entre les extrémités opposées des mâchoires de frein et pouvant servir à déplacer lesdites extrémités en vue d'une application sur le frein, et un dispositif d'ajustement comprenant une entretoise (22) avec une extrémité forcée à se déplacer avec une mâchoire de frein (14), l'autre extrémité de l'entretoise s'engageant dans un élément de levier (24, 124), pivoté (X) vers l'autre mâchoire de frein (12, 112) pour faire tourner l'élément de levier (24, 124) dans une direction de rotation si les extrémités des mâchoires de frein se déplacent sur une distance supérieure à une distance prédéterminée, ledit élément de levier (24, 124) pouvant s'engager dans un élément de réaction (32, 132) pivoté (Y) également vers ladite autre mâchoire de frein (12, 112) et servant à engager l'élément de levier (24, 124) pour permettre la rotation de l'élément de levier (24, 124) dans ladite une direction de rotation, mais non pas dans l'autre, et un moyen de verrouillage à réponse thermique (40, 44, 46; 140, 146) pouvant s'engager dans l'un desdits éléments (32, 124) lorsque ledit un élément (32, 124) se trouve dans une quelconque position d'un intervalle de positions, pour empêcher le pivotement dudit un élément (32, 124) et par suite la mise en service de l'élément d'ajustement au-dessus d'une température définie.

2. Assemblage de frein à tambour selon la revendication 1, dans lequel ledit un élément (32, 124) est verrouillé par un engagement par friction entre le moyen de verrouillage (40, 44, 46; 140, 146) et ledit un élément (32, 124).

3. Assemblage de frein à tambour selon les revendications 1 ou 2, dans lequel le moyen de verrouillage (40, 44, 46; 140, 146) englobe un élément de verrouillage (40, 140) pouvant s'engager par rotation dans ledit un élément (32, 124) et se dégager par rotation de celui-ci.

4. Assemblage de frein à tambour selon l'une quelconque des revendications précédentes, dans lequel ledit élément de verrouillage (40, 44, 46) englobe un levier (44), un élément à réponse thermique (46) agissant sur une extrémité de celui-ci.

5. Assemblage de frein à tambour selon la revendication 4, dans lequel l'élément à réponse thermique (46) est monté sur ladite autre mâchoire de frein (12) près de la garniture de friction (16) correspondante.

6. Assemblage de frein à tambour selon 1 'une quelconque des revendications précédentes, dans lequel le moyen de verrouillage englobe une bande bimétallique enroulée (46').

7. Assemblage de frein à tambour selon l'une quelconque des revendications précédentes, dans lequel ledit moyen de verrouillage (140, 146) englobe un élément de verrouillage (140) monté sur une extrémité d'une bande bimétallique (146).

8. Assemblage de frein à tambour selon l'une quelconque des revendications précédentes, dans lequel ledit moyen de verrouillage (40, 44, 46; 140, 146) est agencé de sorte à s'engager dans une surface (50, 150) sur ledit un élément (32, 124) ayant un centre de courbure situé pratiquement sur l'axe de rotation dudit un élément.

9. Assemblage de frein à tambour selon l'une quelconque des revendications précédentes, dans lequel l'élément de réaction est un cliquet (32).

10. Assemblage de frein à tambour selon l'une quelconque des revendications 1 à 9, dans lequel ledit un élément est l'élément de réaction (32).

11. Assemblage de frein à tambour selon l'une quelconque des revendications 1 à 9, dans lequel ledit un élément est l'élément de levier (124).
